# EUROPEAN PATENT APPLICATION

(11) **EP 2 182 168 A1**
(43) Date of publication of application: **05.05.2010**
(21) Application number: 09173888.0
(22) Date of filing: 23.10.2009
(51) Int. Cl.: F01D 5/14

(54) **Fabricated hybrid turbine blade**

(30) Priority: 28.10.2008 US 259599
(71) Applicant: General Electric Company, Schenectady, NY 12345 (US)
(72) Inventor: Vehr, James William, Easley, SC 29640 (US); Dimascio, Paul Stephen, Greer, SC 29650 (US); Boyer, Bradley Taylor, Greenville, SC 29607 (US)
(74) Representative: Gray, Thomas

(57) **Abstract**

A blade (10) for a turbine (1) includes: a support structure (21) of high strength material as a central portion of the blade (10), the support structure (21) including a root (12) and a body (13) extending to a tip (11), the body (13) providing a leading edge (31), a trailing edge (32) and mounting section (33); and a honeycomb skin (23) attached to the mounting section (33) for providing a lightweight airfoil portion of the blade (10). A method and a turbine (1) are included.

## Description

### BACKGROUND OF THE INVENTION

### 1. Field of the Invention

The invention herein relates to rotating components for a turbine and in particular to embodiments of turbine blades.

### 2. Description of the Related Art

Turbine engines, such as those used for aircraft propulsion and power generation, rely upon arrays of aerodynamic blades for turning of a central shaft. Depending on a location within the turbine, the blade may be subjected to thermal stress arising from combustion gases. In addition, all of the blades (also referred to as "buckets") are subject to mechanical stress associated with rotation about a central axis of the shaft.

Many designs for blades are known. However, due at least to demands for improved output and efficiency of each turbine, there is an ever increasing need for lighter weight and more mechanically robust blades.

### BRIEF DESCRIPTION OF THE INVENTION

In one embodiment, the invention includes a blade for a turbine, the blade including: a support structure of high strength material, as a central portion of the blade, the support structure including a root and a body extending to a tip, the body providing a leading edge, a trailing edge and a mounting section; and a honeycomb skin attached to the mounting section for providing a lightweight airfoil portion of the blade.

In another embodiment, the invention includes a method for fabricating a blade for a turbine, the method including: using a high strength material, forming a central portion of the blade, the central portion including a root and a body extending to a tip, the body providing a leading edge, a trailing edge and mounting section; and attaching a honeycomb skin to a surface of the central portion to provide an airfoil of the blade.

In a further embodiment, the invention includes a turbine including: at least one blade including a support structure of high strength material, the support structure including a root and a body extending to a tip, the body providing a leading edge, a trailing edge and a mounting section; and a honeycomb skin attached to the mounting section for providing a lightweight airfoil portion of the blade.

These and other advantages and features will become more apparent from the following description taken in conjunction with the drawings.

### BRIEF DESCRIPTION OF THE DRAWINGS

There follows a detailed description of embodiments of the invention by way of example only with reference to the accompanying drawings, in which:
FIG. 1A and FIG. 1B, collectively referred to herein as FIG. 1, depict aspects of an aircraft gas turbine and a power generation gas turbine;
FIGS. 2A, 2B, 2C, 2D and 2E depict aspects of a turbine blade fabricated according to the teachings herein;
FIG 3 is a cross sectional view of a support structure for the turbine blade of FIG. 2;
FIG. 4A and FIG. 4B, collectively referred to herein as FIG. 4, are cross sectional views of the turbine blade, depicting a leading edge and a trailing edge, respectively;
FIG. 5A, FIG. 5B, and FIG. 5C, collectively referred to herein as FIG. 5, depict dimensional aspects of embodiments of honeycomb material used in the blade; and
FIG. 6 is a side view of a portion of the turbine blade airfoil.

### DETAILED DESCRIPTION OF THE INVENTION

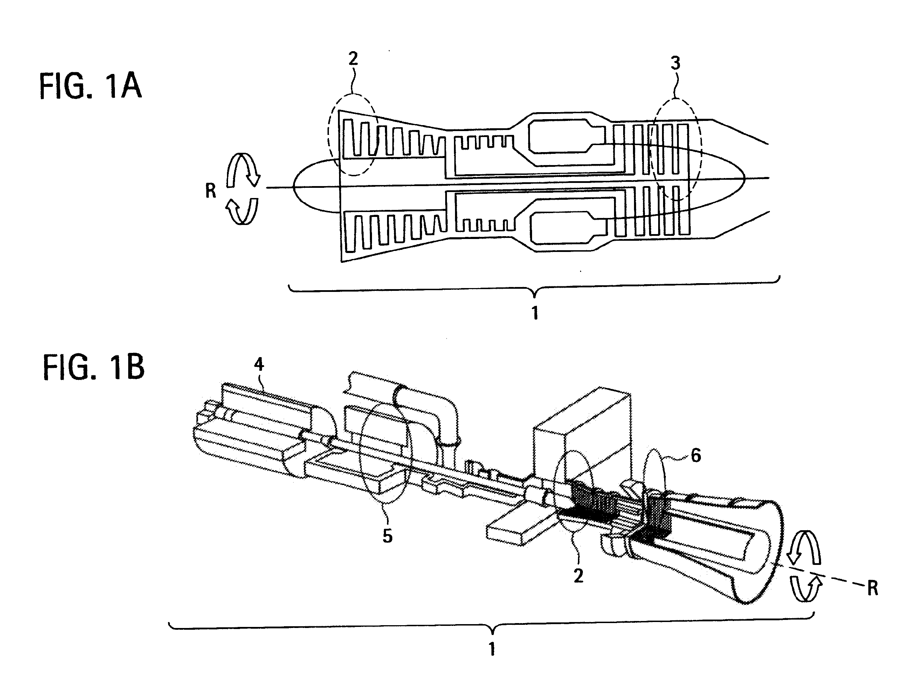

Referring now to FIG. 1, there are shown two examples of a turbine 1 suited for practice of the invention. In FIG. 1A, there is shown an aircraft gas turbine 1. The aircraft gas turbine 1 includes various turbine blades, or "buckets." The blades are generally aerodynamic structures mounted circumferentially about a shaft which is centered in an axis of rotation. In this example of a gas turbine 1 for aircraft, included is a compressor 2 having a plurality of blades for compressing intake air. In addition, a low-pressure-turbine 3 includes a plurality of blades for receiving combustion gases from a combustion chamber within the turbine 1. In FIG. 1B, there is shown a power generation gas turbine 1. The power generation gas turbine 1 also includes the compressor 2, and may further include additional pluralities of blades, such as in a latter stage 6 and within a steam turbine 5. Also shown, for perspective, is a generator 4 used for generation of electrical power from rotation of the shaft of the power generation gas turbine 1. In either embodiment of the turbine 1, the various blades will rotate about an axis of rotation, R.

The terminology "compressor" "low pressure turbine," "steam turbine" and the like are illustrative of locations within the turbine 1 where the blades disclosed herein may be used. Accordingly, such terminology is merely illustrative and is not limiting of the invention herein.

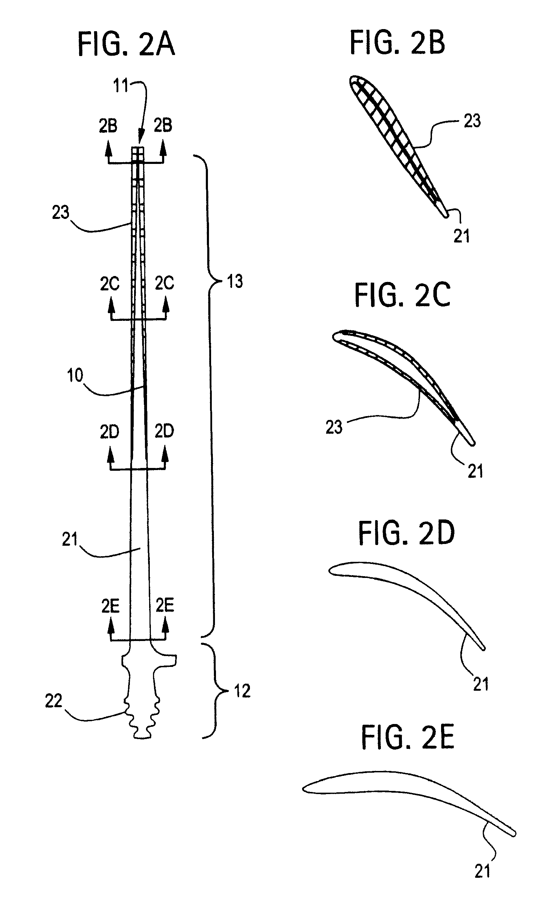

Referring now to FIG. 2, there are shown aspects of an embodiment of a blade 10 according to the teachings herein. In this example, the blade 10 includes a section generally referred to as a "tip" 11, a section generally referred to as a "root" 12, and a section generally referred to as a "body" 13. When installed in the gas turbine 1, the tip 11 is generally located near an inner wall of a housing to the gas turbine 1, and may be located within grooves or other such devices useful for ensuring alignment, strength, efficiency or other aspects of operation. Generally, the root 12 is a section of the blade 10 that provides for anchoring of the blade 10 about the central shaft which is centered in the axis of rotation, R. Generally, the body 13 of the blade 10 is of an aerodynamic form and provides for at least one of compressing gas in the compressor 2, or receiving expanding gas, such as in the low pressure turbine 3, latter stages 6 or the steam turbine 5.

In general, the blade 10 includes a high strength support structure 21. The high strength support structure 21 assumes an aerodynamic shape near the root (refer to sections 2D-2D and 2C-2C in FIG. 2), and gradually diminishes in stature to what is generally a flat or substantially flat spine for the blade 10 (refer to sections 2B-2B and then 2A-2A in FIG. 2). In other embodiments, the high strength support structure 21 is of a curved, slightly offset or of some other shape such that it is of a profile that is reduced or smaller than the profile for a completed blade 10. In short, the tapering down of the high strength support structure 21 provides for a complimentary use of a honeycomb skin 23 which is coupled to the surface of the high strength support structure 21.

For convenience, the high strength support structure 21 may be referred to as a "core" or a "central portion" and by other similar terms. The honeycomb skin 23 may be referred to as providing a "airfoil" "an aerodynamic portion" and by other similar terms.

Exemplary materials for the high strength support structure 21 and the honeycomb skin 23 include alloys such as a superalloy, a cobalt based alloy, a hardened alloy, a carbide based alloy, a nickel based alloy, an undirectionally solidified alloy (in other words, an alloy solidified without a preferred direction), an iron based alloy, a wrought austenitic stainless steel, a martensitic stainless steel, a ferritic stainless steel, a carbon steel, a common titanium alloy and an inter-metallic titanium alloy. In some embodiments, a ceramic matrix composite material may be used.

The high strength support structure 21 may be fabricated using various techniques, such as, without limitation, casting, forging, welding (such as to assemble various parts), brazing, sanding, polishing, etching and the like. Fabrication of the high strength support structure 21 may include execution of combinations of techniques and through various stages of assembly.

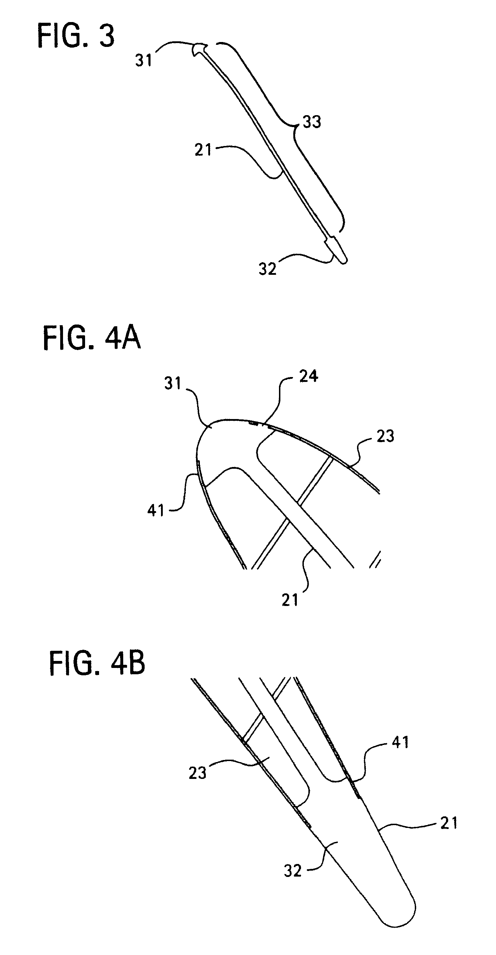

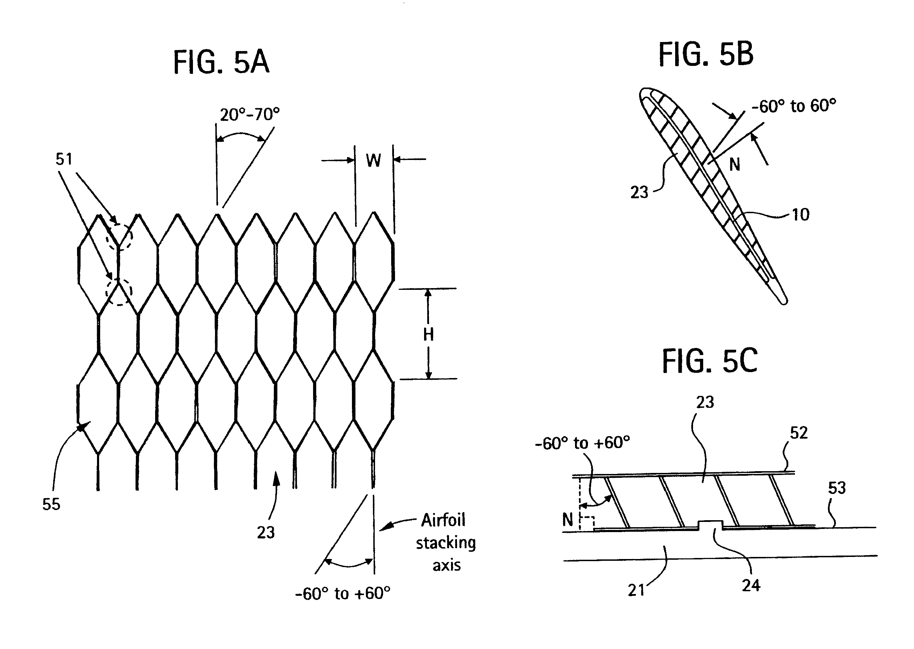

In some embodiments, the high strength support structure 21 includes one to many perforations (not shown). In further embodiments, the high strength support structure 21 may include at least one of concave and convex gripping features. In such embodiments, the perforations and the gripping features 24 (examples being shown in FIG. 4B and 5C) may provide for reduced weight, improved attaching of the honeycomb skin 23 and other such enhancements.

The honeycomb skin 23 may be attached to the high strength support structure 21 by use of various techniques. For example the honeycomb skin 23 may be at least one of brazed, such as by using braze tapes or powder, welded such as by fusion welding, bonded, such as by diffusion bonding and attached by other techniques. In general, the honeycomb skin 23 is attached to the high strength support structure 21 using techniques that provide for durable operation of the blade 10 under normal operating conditions.

Referring now to FIG. 3, further aspects of the high strength support structure 21 are shown. In this top-view cross-sectional illustration of an exemplary embodiment, it may be seen that the high strength support structure 21 generally includes a section for a leading edge 31 and another section for a trailing edge 32. As this cross-sectional view is of the blade 10 near the tip 11, an intermediate area between the leading edge 31 and the trailing edge 32 is generally flat, or substantially flat. The flat or substantially flat portion of intermediate area is provided as a mounting section 33 for mounting of the honeycomb skin 23.

Referring now to FIG. 4, aspects of the leading edge 31 (FIG. 4A) and the trailing edge 32 (FIG. 4B) are shown. In FIG. 4A, the leading edge 31 includes an overlap 41. Likewise, in FIG. 4B, the trailing edge 32 includes the overlap 41. The overlap 41 may be formed of a comparatively thin layer of material used in the honeycomb skin 23. Generally, at least one of the leading edge 31 and the trailing edge 32 include a recessed zone for accepting the overlap 41 while providing for a smooth transition to material of the high strength support structure 21.

The recessed zone may be included by a variety of techniques, such as, for example, machining, casting, etching and the like. Included in the recessed zone may be at least one gripping feature 24. The gripping feature 24 generally provides an irregular surface feature to improve the attachment of the overlap 41 or the honeycomb skin 23.

Referring now to FIG. 5, there are shown further aspects of the honeycomb skin 23. FIG. 5A provides a side cross-sectional view of the honeycomb skin 23. In this illustration, each intersection 51 within the honeycomb skin 23 at a vertex of a honeycomb cell 55 (with one cell 55 being shown as a shaded portion of the honeycomb skin 23) includes an orientation angle of between about 20° to about 70°. Generally, the orientation angle is selected to reduce concentration of stress at the intersection 51. The honeycomb skin 23 may be oriented in any manner desired, such as in a manner that provides for reduced stress. In one embodiment, the orientation may be elliptical.

An aspect ratio (Height, H, divided by Width, W (H/W)) for each cell 55 is about 2.5. However, the aspect ratio may range from about 0.5 to about 6.

As also shown in FIGS. 5B and 5C, an angle formed between a wall of each cell 55 and a plane that is normal (denoted as "N") to a face of the mounting portion 33 is between about -60° to about +60°. As depicted in FIG. 5C, the honeycomb skin 23 includes an outer surface 52, and may optionally include an inner surface 53. Generally, the outer surface 52 provides a smooth and aerodynamic surface for transition of gas over the blade 10. The optional inner surface 53 may be included to improve attachment to the high strength support structure 21, as well as to provide for improved strength of the honeycomb skin 23 during at least assembly processes. Also depicted in FIG. 5C is another example of the gripping feature 24.

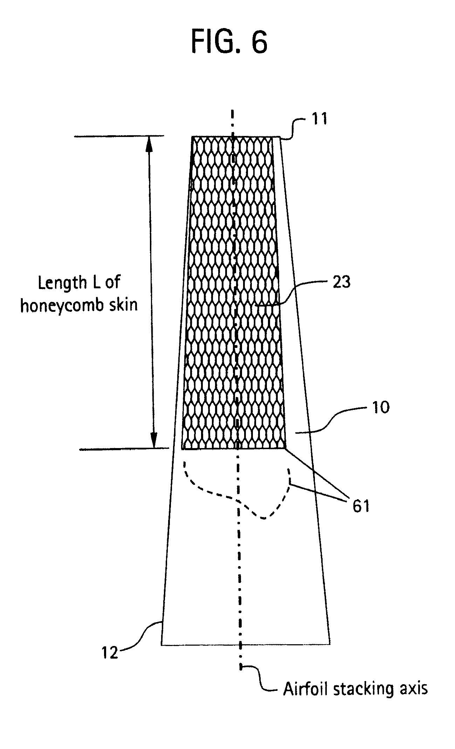

Referring now to FIG. 6, there is shown a side view of the blade 10. In this illustration, the blade 10 includes a length L of honeycomb skin 23 that extends from about the tip 11 to some point along the body 13 of the blade 10. In some embodiments, the length L may extend from about the tip 11 to about the root 12. In some other embodiments, the length, L, starts at some distance from the tip 11, extending at least one of toward the root 12 and to the root 12. Further, the honeycomb skin 23 need not have a uniform terminal edge 61, shown in FIG. 6 as perpendicular to the airfoil stacking axis. In some embodiments, the terminal edge 61 of the honeycomb skin 23 may be shaped, such as according to the airfoil design, as indicated by the dashed line.

Having thus described aspects of the blade 10, it should be noted that the blade 10 may be implemented as a rotating component in any one of an aircraft engine (gas turbine 1), power generation gas turbine 1 and steam turbine 1.

For implementation in the aircraft engine, the blade 10 may be implemented advantageously in the fan compressor forward stages and the low pressure turbine latter stages. Similarly for the power generation gas turbine 1, the blade 10 may be implemented advantageously in the compressor forward stages and the turbine latter stages. In a steam turbine application, the blade 10 could be implemented advantageously in the low pressure section where the rotating blades become very large.

Accordingly, the teachings herein provide for a large annulus area blade that uses a light weight honeycomb skin 23 forming an airfoil bonded (i.e., attached) to the high strength support structure 21.

This results in improved gas turbine output and efficiency by increased exit annulus area beyond a conventional high strength alloy casting. As the turbine power gets larger, a higher exit annulus area is required to maintain efficiency. In prior art designs, mass of the airfoil may increase exponentially to maintain stresses within material capability. In contrast, this invention reduces mass of the airfoil by replacing solid metal with the honeycomb skin 23.

In some embodiments, the high strength support structure 21 includes a thin wall casting or forging with a wall thickness less than about 0.03 inches at the tip 11. In other embodiments, an overall reduction of weight for the blade 10 is about 50%.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A blade (10) for a turbine (1), the blade (10) comprising:
a support structure (21) of high strength material, as a central portion of the blade (10), the support structure (21) comprising a root (12) and a body (13) extending to a tip (11), the body (13) providing a leading edge (31), a trailing edge (32) and a mounting section (33); and
a honeycomb skin (23) attached to the mounting section (33) for providing a lightweight airfoil portion of the blade (10).

2. The blade as in claim 1, wherein the support structure comprises one to many perforations.

3. The blade as in claim 1 or 2, wherein the support structure comprises at least one gripping feature.

4. The blade (10) as in any of the preceding claims, wherein the support structure (21) comprises a material that is at least one of a superalloy, a cobalt based alloy, a hardened alloy,a carbide based alloy, a nickel based alloy, an undirectionally solidified alloy, an iron based alloy, a wrought austenitic stainless steel, a martensitic stainless steel, a ferritic stainless steel, a carbon steel, a common titanium alloy and an inter-metallic titanium alloy.

5. The blade (10) as in any of the preceding claims, wherein the honeycomb skin (23) comprises a material that is at least one of a superalloy, a cobalt based alloy, a hardened alloy,a carbide based alloy, a nickel based alloy, an undirectionally solidified alloy, an iron based alloy, a wrought austenitic stainless steel, a martensitic stainless steel, a ferritic stainless steel, a carbon steel, a common titanium alloy and an inter-metallic titanium alloy.

6. The blade (10) as in any of the preceding claims, wherein an angle between a wall of the honeycomb skin (23) and a plane that is normal to a face of the mounting section (33) is between about minus sixty degrees to about plus sixty degrees.

7. The blade (10) as in any of the preceding claims, wherein an aspect ratio for cells of the honeycomb skin (23) ranges between about 0.5 to about 6.

8. A method for fabricating a blade (10) for a turbine (1), the method comprising:
using a high strength material, forming a central portion of the blade (10), the central portion comprising a root (12) and a body (13) extending to a tip (11), the body (13) providing a leading edge (31), a trailing edge (32) and mounting section (33); and
attaching a honeycomb skin (23) to a surface of the central portion to provide an airfoil of the blade (10).

9. The method as in claim 8, wherein attaching comprises at least one of brazing, bonding, welding and fusing the honeycomb skin (23) to the central portion.

10. The method as in claim 8 or 9, further comprising attaching an overlap (41) to at least one of the trailing edge (32) and the leading edge (31).

11. The method as in any of claims 8 to 10, further comprising designing the support structure (21) to include dimensions for installation into one of a compressor (2) of a gas turbine (1), a low pressure turbine (3), and a steam turbine (5).

12. The method as in any of claims 8 to 11, wherein forming comprises at least one of casting, forging, welding, brazing, sanding, polishing and etching.

13. A turbine comprising:
at least one blade comprising a support structure of high strength material, the support structure comprising a root and a body extending to a tip, the body providing a leading edge, a trailing edge and a mounting section; and
a honeycomb skin attached to the mounting section for providing a lightweight airfoil portion of the blade.

14. The turbine of claim 13, wherein at least one blade is comprised within one of a compressor of a gas turbine, a low pressure turbine, and a steam turbine.

15. The turbine of claim 13 or 14, comprising one of an aircraft gas turbine and a power generation gas turbine.
